# EUROPEAN PATENT APPLICATION

(11) **EP 4 344 007 A1**
(43) Date of publication of application: **27.03.2024**
(21) Application number: 22196959.5
(22) Date of filing: 21.09.2022
(51) Int. Cl.: H02J 3/14, H02J 3/00, G06Q 50/06, H02J 13/00

(54) **METHOD FOR FORMING A DEMAND-RESPONSE RESOURCE AND AN AGGREGATED SYSTEM FOR RESPONDING TO A BALANCING DEMAND**

(71) Applicant: S.C. Nordic A/S, 7840 Højslev (DK)
(72) Inventor: Birkelund, Mogens, 7840 Højslev (DK)
(74) Representative: Patrade A/S

(57) **Abstract**

Method (1000) for forming a demand-response resource to an electricity market zone (10) and/or combined market zones (20), wherein the method (1000) comprises steps of
- providing (1100) electric units (EM-1, ..., EM-N) within an electricity market zone (10) operated by one or more third-parties;
- providing (1100) response curves (110) of the respective plurality of electric units (EM-1, ..., EM-N);
- receiving (1200) power consumption data (120) of the plurality of electric units (EM-1, ..., EM-N);
- monitoring (1300) balancing demand (130) of the electricity market zone (10) and/or the combined market zones (20);
- forming (1400) a demand-response resource (140) by combining several of the electric units (EM-1, ..., EM-N) into a virtual electric machine (30) as a function of the balancing demand (130) and the power consumption data (120) of the plurality of electric units (EM-1, ..., EM-N);
- operating (1500) the virtual electric machine (30) as a function of market demand.

## Description

### Field of the Invention

The present invention relates to method for forming a demand-response resource to an electricity market zone and/or combined market zone.

The present invention further relates to an aggregated system for responding to a balancing demand on an electricity market zone and/or combined electricity market zones.

The present invention further relates to a method for forming virtual electric machine to be used as one or more demand-response resources in an electricity market zone and/or combined energy market zone.

### Background of the Invention

Any electricity market will need additional demand response such that the electricity is balanced on the electricity market. As an example the Danish electricity market DK1 has several demand services which parties can provide offers on. One of these demand services is FCR response for balance generation and demand; thereby balancing the frequency to 50,000 Hz. There are many other types of demand services. A party can earn money or pay less by offering electric machines to a demand response, however there are strict requirements and not all electric machines are suitable for such a such demand resource, the electric unit may have to high an inertia and the electric machine is therefore not capable to respond sufficiently fast or the electric unit may in itself have to low power consumption to affect the balancing on the electric market.

The problem with balancing will only increase with production be renewables, which may create need for increased consumption for several hours and then suddenly there will be a requirement to remove this consumption i.e. the sky may become cloudy and the production by solar panels will fall drastically. Thus, renewals will increase the need for equal flexibility on the demand side - demand response. DS-DR can support renewable production by supporting the usage of energy as it is produced.

Thus, there is a need to increase the number of electric units which can be used as a demand response such that future electric markets can support the increased number of renewables.

### Object of the Invention

It is an object to provide methods and an aggregated system for responding to a balancing demand.

### Description of the Invention

An object of the invention is achieved by a method for forming a demand-response resource to an electricity market zone and/or combined market zones. The method comprises steps of
- providing electric units within an electricity market zone operated by one or more third-parties;
- providing response curves of the respective plurality of electric units;
- receiving power consumption data of the plurality of electric units;
- monitoring balancing demand of the electricity market zone and/or the combined market zones;
- forming a demand-response resource by combining several of the electric units into a virtual electric machine as a function of the balancing demand and the power consumption data of the plurality of electric units;
- operating the virtual electric machine as a function of market demand.

The demand-response resources are characterised by a combination of electric units with mapped response profiles that may participate in the electricity market zones and/or combined market zones, where combined market zones are two or more electricity market zones. The electric units are part of a single electricity market zone; however some demand-response resources are offered for balancing combined market zones.

The demand-response resources may for the Danish electricity market zone (DK1) be an FCR response for balance generation and demand; thereby balancing the frequency to 50,000 Hz. All types of demand-response resources are known for a given market. The energy and reserve markets may be divided into electricity market zones and/or combined market zones with different market demands. The demand-response resources need to comply with the technical demands, geographical dependency etc. of a given zone to participate in the market.

The electric units may be heat pumps, ventilation units, electric boilers, cooling systems or other electricity consuming elements, however if response curves of the respective electric units should be provided. The step of providing response curves may include performing response tests for generating response curves.

The electric units are operated by one or more third parties and thus the availability of power consumption of each of the electric unit will change as a function of time. It is thus important that the method receives power consumption data of the plurality of electric units regularly.

This enables that the method can form a demand-response resource by combining several of the electric units into a virtual electric machine, which is able to provide the necessary balancing demand. The balancing demand could be for stabilising the frequency.

The method enables that decentralised third party electric devices can be offered as a demand-response resource without disturbing or with limited disturbance of the third party's operation as third party operates as required. The third party may be able to observe that the ventilation is operating at a higher rate or that the temperature of a boiler is increased. The third party may accept the limited disturbance as the third party is paid for providing a demand-response resource.

The step of operating may be a step of continuously recording the demand-response resource as a function of demand thereby ensuring that the continued qualification of the demand-response resource to participate in the market.

The demand-response resource is not limited to only increase power consumption and the demand-response resource may also decrease power consumption if required by the market demand.

Thereby, the method can form a demand-response source suitable for participating in one or more markets, and if the demands-response source ceases the qualify for a particular market or a better market arises, then the method is capable of moving the demands-response source to a different and/or better market.

In an aspect the method may comprise steps of
- reserving part of a power consumption availability of the electric units forming the demand-response resource, such that the third party is prevented from using the reserved part of the available power consumption.

Thereby, it is ensured that the demand-resource has the power consumption to respond. In most cases this will not disturb the third party, however the demand-response resource must be able to respond. This is particularly relevant for electric units having a high inertia and high energy consumption as the electric unit may be a crucial part of the demand-response resource. An example is cooling which often has many pumps causing a high inertia in a response and at the same time the power consumption is high.

In an aspect, the virtual electric machine may be formed with an excess capacity relative to required balancing demand, such that one, more or all electric units is available to the one or more third parties irrespective of the electric units forming part of the virtual electric machine. Thereby, the method reduces the risk of disturbing operation of a third party.

In an aspect, the method may further comprise a step of
- providing a plurality of auxiliary electric units within an electricity market zone and response curves of the respective plurality of passive electric units;
wherein the forming the demand-response resource by combining several of the electric units into a virtual electric machine includes combining one or more of the auxiliary electric units.

The auxiliary electric units differ from the other electric units in that the auxiliary electric units are not operated by any third party. Thus, the auxiliary electric units will always, unless in use, have additional power consumption available for a demand-response resource.

The one or more of the auxiliary electric units will especially be used for several minor adjustment to the needed power consumption, thereby the third-party production is disturbed as little as possible. In general, for the third-party, it is much more disturbing to the production to have several small changes in needed power consumption compared to the third party being forced to have a single large increase and/or large decrease in power consumption.

Furthermore, the one or more of the auxiliary electric units also esnure such that the third party's electric units can respond to a single large increase and/or large decrease in power consumption by operating the auxiliary electric units such that the virtual electric machine comply with the requirements of the market demand response.

An object of the invention is achieved by an aggregated system for responding to a balancing demand on an electricity market zone and/or combined electricity market zones. The aggregated system comprises
- a plurality of electric units within an electricity market zone operated by one or more third-parties;
- a plurality of local controllers connected to and controlling the plurality of electric units, wherein each of the local controllers comprises a local communication module and a means for receiving power consumption data of the electric units connected to the local controllers;
- a server comprising
   - a server communication module in communication with the local communication modules, wherein the local communication modules send power consumption data of the electric units connected to the local controllers; and
   - a storage module having stored thereon response curves of the plurality of electric units;
   - a monitoring module adapted for monitoring balancing demand of the electricity market zone and/or the combined market zones;
   - a computation module adapted for forming a demand-response resource by combining several of the electric units into a virtual electric machine as a function of the power consumption data, the response curves and requirements of the balancing demand; and
   - a global controller configured to activate the virtual electric machine by sending instructions to the local controllers of the electric units forming part of the of the virtual electric machine.

The aggregated system is a server in connection with a plurality of electric units through a plurality of local controllers that provide data and enables control of the plurality of electric units. Thereby, the aggregated system can form a demand-response resource using third party electric units.

The means for receiving power consumption data of the electric units may be a power meter or similar. The means may be a voltage meter and a current meter which can be combined to measure the power consumption. There may be other solutions capable of determining the power consumption of an electric meter.

The electric units are operated by one or more third-parties and thus the plurality of electric units are not as such on stand-by for forming part of a demand-response instead the electric units are operated according to the need of the third-party.

In an aspect, the server may continuously receive power consumption data from the local controllers of the activated virtual electric machine and the global controller provide instruction to change power consumption to one or more of the local controllers of the activated virtual electric machine as a function of the received power consumption data.

The server comprises response curves of the plurality of electric units, however that does not mean that the plurality of electric units reacts exactly according to the response curves stored on the server. Thus, the virtual electric machine can be operated with greater precision by continuously receiving power consumption data such that adjustments can be made continuously. The term continuously should be interpreted broadly, and it includes sending data periodically.

The server may receive power consumption data every 30 seconds, 10 seconds, 5 seconds, 3 seconds, 1 second, 0.5 second, or 0.1 seconds or between 30-0.1 seconds or between 5-0.1 seconds.

An advantage of this is that the virtual electric machine may be continuously accommodated to the balancing demand if a change in power consumption of the virtual electric machine occurs.

In an aspect, the global controller may activate two or more virtual electric machines as a function of an imbalance in the electricity market zone or combined electricity market zones.

The aggregated system is not limited to only activating and controlling one virtual electric machine. The aggregated system may active two or more virtual electric machines as the aggregated system is only limited by the available capacity of the plurality of electric machines.

In an aspect, the monitoring module may comprise a frequency measurement unit monitoring the frequency of the electricity market zone and/or the combined market zones, wherein the global controller configured to activate a virtual electric machine as a function of the frequency of the electricity market zone and/or the combined market zones.

This will enable that the monitoring module can directly measure the frequency instead of relying on data from a third-party provider.

In an aspect, the aggregated system may comprise a back-up consumption centre within the electricity market zone, wherein the back-up consumption centre comprises
- auxiliary electric units,
- one or more centre controllers connected to the auxiliary electric units and comprising a centre communication module in communication with the server communication module, and
one or more power consumption measurement units,
wherein the computation module is further adapted for forming the demand-response resource by combining several of the electric units and one or more of the auxiliary electric units into the virtual electric machine.

The back-up consumption centre provides additional power capacity for the back-up consumption centre to offer to the demand market. The auxiliary electric units are not controlled by a third party and thus the auxiliary electric units will always have a capacity for increasing and/or decreasing power production. The auxiliary electric units or some of the auxiliary electric units may not form any other purpose than being consumers of electric energy i.e. an auxiliary electric unit may be a heater in an open hall such that the generated heat energy is just wasted.

The one or more of the auxiliary electric units will especially be used for several minor adjustment to the needed power consumption, thereby the third-party production is disturbed as little as possible. In general, for the third-party, it is much more disturbing to the production to have several small changes in needed power consumption compared to the third party being forced to have a single large increase and/or large decrease in power consumption.

Furthermore, the one or more of the auxiliary electric units also ensure such that the third party's electric units can respond to a single large increase and/or large decrease in power consumption by operating the auxiliary electric units such that the virtual electric machine comply with the requirements of the market demand response.

The back-up consumption centre may be a warehouse stocked with heat pump systems or ventilators or electric boilers for heating water or steam.

The back-up consumption centre may be utilised to create consumption. The auxiliary electric units can enhance the qualifications of electric units by creating consumption thereby forming a demand-response resource that may participate in a more favourable market.

In an aspect, one virtual electric machine may be formed from a heat pump systems and a plurality of ventilations units, wherein the heat pump system and a plurality of ventilations units are operated as a function of instructions from the global controller.

The heat pump system may have a power consumption of one or more megawatt and the heat pump system is made of several various parts including pumps. The high-power consumption and the several various parts result in a high inertia system which is slow to respond to instruction of increasing or decreasing power consumption. Thus, the heat pump system is not suitable for a demand-response resource as the response curve will be to slow, however that can be solved by combining the heat pump system with a plurality of low inertia electric units such as the plurality of ventilations units.

The heat pump system may be a cooling system or a heating system or a combination.

An object of the invention is achieved by a computer program product comprising instructions to cause the aggregated system to execute the steps of the method.

An object of the invention is achieved by a computer-readable medium having stored thereon the computer program.

An object of the invention is achieved by a method for forming virtual electric machines to be used as one or more demand-response resources in an electricity market zone or combined energy market zone, the method comprises steps of
- providing a plurality of electric units within an electricity market zone, wherein the plurality of electric units includes one or more high inertia electric units with response curves not suitable to at least one of the one or more demand-reserve services;
- testing each of the electric units to measure power consumption and to measure a response curve with a pre-set time resolution,
- creating one or more virtual electric machines by combining the power consumption and the response curves of the plurality of electric units including at least one of the one or more high inertia electric units to a virtual response curve matching the requirements of at least one of the demand-response resources.

An advantage of this is that a high inertia electric unit included in a virtual electric machine may be able to participate in the one or more demand-reserve services, that it is not suitable for on its own.

The step of testing may be a step for measuring the response curve with a time resolution suitable for one or more demand-reserve services. The time resolution may be 30 second or 10 second or 5 seconds or greater such as 3 seconds, or 1 second or 0.5 second or 0.1 second or even greater. The pre-set time resolution is chosen such that the time resolution matches the demands defined by the demand response programs for the electricity market.

A person skilled in the art would know how to choose an appropriate time resolution for a given electric unit and/or for given demand-reserve services.

Thereby, the method can map the response profile of each electric unit and determine how fast each electric unit reacts and how much power each electric unit consumes. This allows the method to form one or more virtual electric machines suitable for a specific response-demands source.

In an aspect, the time resolution is 30 second, or 10 second or 5 second or 1 second, 0.1 second, or a greater time resolution.

The different demand-reserve services may have different time resolution requirements.

A person skilled in the art would know how to choose an appropriate time resolution for a given electric unit.

In an aspect, wherein two or more virtual electric machines includes at least one common electric unit from the plurality of electric units. Thus, the method enable that the same electric unit is used for two or more virtual electric machine.

### Description of the Drawing

Embodiments of the invention will be described in the figures, whereon:
Fig. 1 illustrates an aggregate system for responding to a balancing demand on an electricity market zone and/or combined electricity market zones;
Fig. 2 illustrates a virtual machine;
Fig. 3 illustrates a response curve of a cooling system and a virtual machine comprising the cooling systems and ventilation units;
Fig. 4 illustrates a method for forming a demand-response resource to an electricity market zone and/or combined market zones; and
Fig. 5 illustrates method for forming virtual electric machine to be used as one or more demand-response resources in an electricity market zone or combined energy market zone.

**Detailed Description of the Invention**

| **Item** | **No** |
|---|---|
| Electricity market zone | 10 |
| Combined market zones | 20 |
| Electric units | EM-1, ..., EM-N |
| Virtual electric machine | 30 |
| Excess capacity | 32 |
| Auxiliary electric units | AEU-1, ..., AEU-M |
| Heat pump systems | 40 |
| Ventilations units | 50 |
| Response curves | 110 |
| Power consumption data | 120 |
| Balancing demand | 130 |
| Demand-response resource | 140 |
| Power consumption | 220 |
| Virtual response curve | 230 |
| Aggregated system | 500 |
| Local controllers | 512 |
| Local communication module | 514 |
| Back-up consumption centre | 520 |
| Centre controllers | 522 |
| Centre communication module | 524 |
| Server | 600 |
| Server communication module | 610 |
| Storage module | 620 |
| Monitoring module | 630 |
| Computation module | 640 |
| Global controller | 650 |
| Method | 1000 |
| Providing | 1100 |
| Receiving | 1200 |
| Monitoring | 1300 |
| Forming | 1400 |
| Operating | 1500 |
| Reserving | 1600 |
| Method | 2000 |
| Providing | 2100 |
| Testing | 2200 |
| Creating | 2300 |

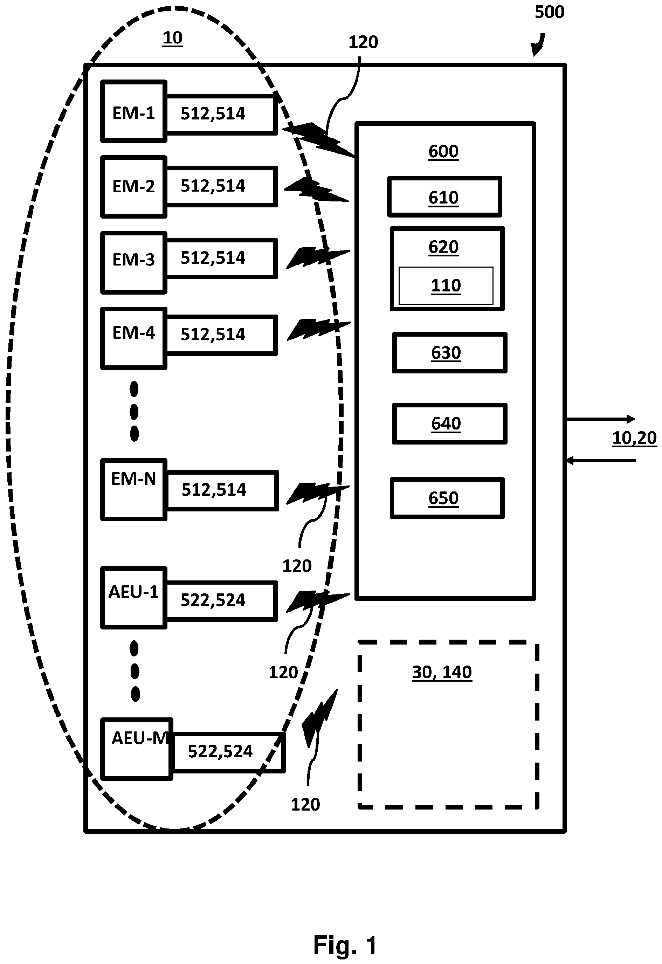

Fig. 1 illustrates an aggregate system 500 for responding to a balancing demand on an electricity market zone 10 and/or combined electricity market zones 20.

The aggregated system 500 comprises a plurality of electric units EM-1, ..., EM-N within an electricity market zone 10 operated by one or more third-parties. The one or more third-parties will operate the plurality of electric units EM-1, ..., EM-N without or with very limited regard for the aggregate system 500 as the third-parties should be affected as little as possible. A dotted circle is drawn around the plurality of electric units EM-1, ..., EM-N as these units can be decentralised positioned within the electricity market zone 10.

The aggregated system 500 is in communication with the plurality of electric units EM-1, ..., EM-N via a plurality of local controllers 512 connected to and controlling the plurality of electric units EM-1, ..., EM-N, wherein each of the local controllers 512 comprises a local communication module 514 and a means for receiving power consumption data 516 of the electric units EM-1, ..., EM-N connected to the local controllers 512. The means for receiving power consumption data 516 may be a power meter or something similar. Some electric units measure power consumptions and here the means is simply a data link for receiving the power consumptions directly from these electric units.

The aggregated system 500 has a server 600 comprising a server communication module 610 in communication with the local communication modules 514, wherein the local communication modules 514 send power consumption data 120 of the electric units EM-1, ..., EM-N connected to the local controllers 512.

The server 600 has a storage module 620 having stored thereon response curves 110 of the plurality of electric units EM-1, ..., EM-N) as this enables calculation of a virtual electric machine 30.

The server 600 has a monitoring module 630 adapted for monitoring balancing demand 130 of the electricity market zone 10 and/or the combined market zones 20. This is required otherwise the requirement of the balancing demand is unknown and no virtual electric machine 30 can be formed. The monitoring module 630 may comprise a frequency measurement unit monitoring the frequency of the electricity market zone 10 and/or the combined market zones 20.

The server 600 has a computation module 640 adapted for forming a demand-response resource 140 by combining several of the electric units EM-1, ..., EM-N into a virtual electric machine 30 as a function of the power consumption data 120, the response curves 110 and requirements of the balancing demand. Thus, the virtual electric machine 30 is the at least one demand-response resource 140.

The server 600 has a global controller 650 configured to activate the virtual electric machine 30 by sending instructions to the local controllers 512 of the electric units EM-1, ..., EM-N forming part of the virtual electric machine 30. The server 600 continuously receives power consumption data 120 (shown as a lightning symbol) from the local controllers 512 of the activated virtual electric machine 30 and the global controller 650 provide instruction to change power consumption to one or more of the local controllers 512 of the activated virtual electric machine 30 as a function of the received power consumption data 120. Here continuously also includes sending periodically.

The global controller 650 may be configured to activate a virtual electric machine 30 as a function of the frequency of the electricity market zone 10 and/or the combined market zones 20.

The aggregated system 500 may have a plurality of auxiliary electric units (AEU-1, ..., AEU-M which are not operated by a third party and thus the operation of auxiliary electric units AEU-1, ..., AEU-M can be controlled completely from 0 % to 100 %. There is one or more centre controllers 522 connected to the auxiliary electric units AEU-1, ..., AEU-M and comprising a centre communication module 524 in communication with the server communication module 610. Furthermore, there is one or more power consumption measurement units 526 such as a power meter for measuring power consumption. The computation module 640 is in this embodiment further adapted for forming the demand-response resource 140 by combining several of the electric units EM-1, ..., EM-N and one or more of the auxiliary electric units AEU-1, ..., AEU-M into the virtual electric machine 30.

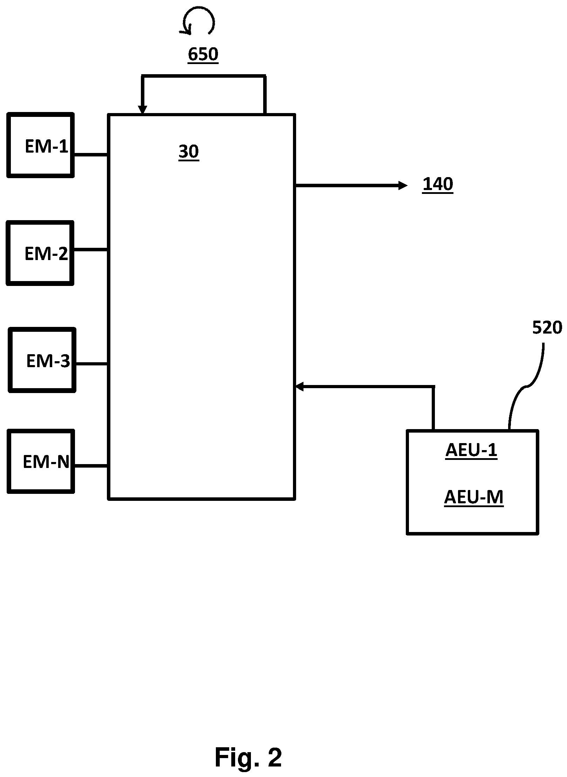

Fig. 2 illustrates a virtual electric machine 30. The virtual electric machine 30 is a demand-response resource 140 which can be used for balancing a grid of an electricity market zone 10 and/or combined energy market zone 20. The virtual electric machine 30 is formed of several auxiliary electric units AEU-1, ..., AEU-M being part of a back-up consumption centre 520 and several of the electric units (EM-1, ..., EM-N). The virtual electric machine 30 is regulated by global controller 650 such that the demand-response matches markets need.

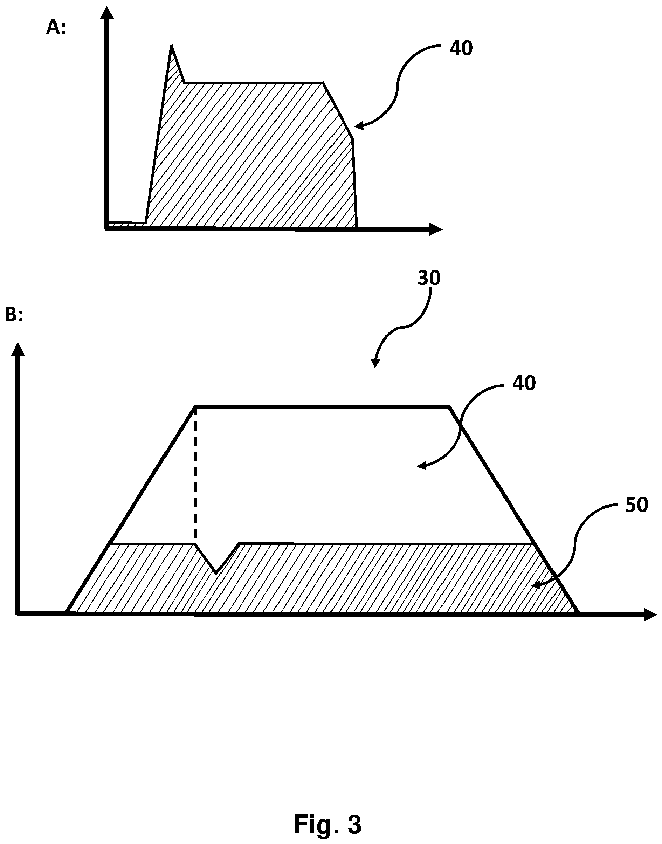

Fig. 3 illustrates a response curve of a cooling system 40 (fig. 3A) and a virtual machine 30 comprising the cooling system 40 and ventilation units 50.

Fig. 3A disclose an example of a response curve for a cooling system 40. The power consumption is the second axis and time is along the first axis. The cooling system 40 has a high inertia and thus the power consumption at the start is low until it rises to a high peak after which the power consumption is stable. This slow start followed by a high peak means that the cooling system 40 cannot in itself be used as a demand-response resource since the response is to slow at the start and to fast at the peak. The cooling system 40 would at different times underperform and overperform. This is solved by forming a virtual electric machine 30 formed of the cooling system 40 and a plurality of ventilators 50. At the start the plurality of ventilators 50 provide all the required demand after which the cooling system 40 ramps up and overshoots. The plurality of ventilators 50 reduce their power consumption to compensate for the overshot. Thereby the cooling system 40 can form part of the market response.

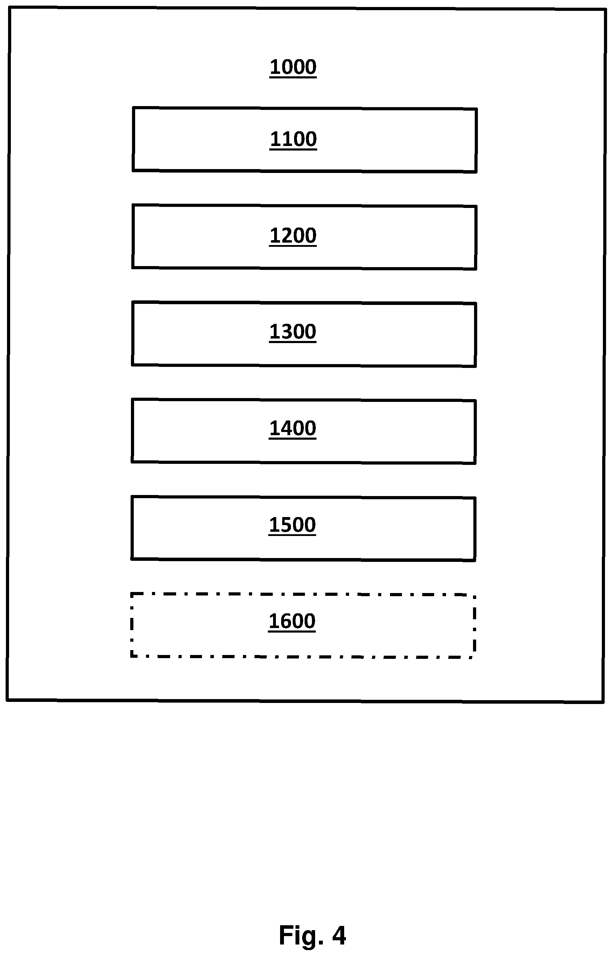

Fig. 4 illustrates a method 1000 for forming a demand-response resource to an electricity market zone 10 and/or combined market zones 20.

The method 1000 comprises steps of
- providing 1100 electric units EM-1, ..., EM-N within an electricity market zone 10 operated by one or more third-parties;
- providing 1100 response curves 110 of the respective plurality of electric units EM-1, ..., EM-N;
- receiving 1200 power consumption data 120 of the plurality of electric units EM-1, ..., EM-N;
- monitoring 1300 balancing demand of the electricity market zone 10 and/or the combined market zones 20;
- forming 1400 a demand-response resource 140 by combining several of the electric units EM-1, ..., EM-N into a virtual electric machine 30 as a function of the balancing demand 130 and the power consumption data 120 of the plurality of electric units EM-1, ..., EM-N; and
- operating 1500 the virtual electric machine 30 as a function of market demand.

The method 1000 may further comprise steps of reserving 1600 part of a power consumption availability of the electric units EM-1, ..., EM-N forming the demand-response resource 140, such that the third party is prevented from using the reserved part of the available power consumption.

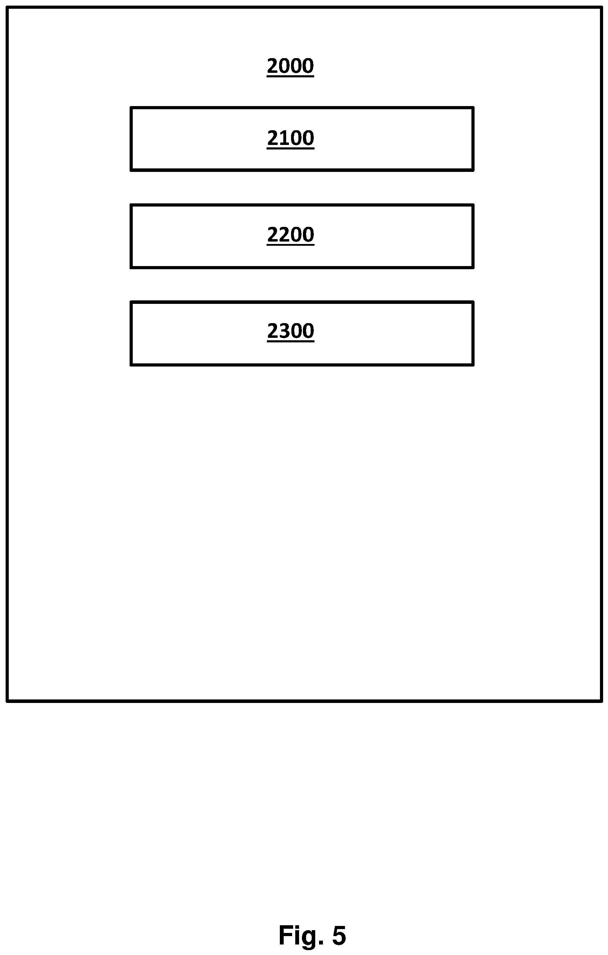

Fig. 5 illustrates method 2000 for forming a virtual electric machine 30 to be used as one or more demand-response resources in an electricity market zone 10 or combined energy market zone 20.

The method 2000 comprises steps of
- providing 2100 a plurality of electric units EM-1, ..., EM-N within an electricity market zone 10, wherein the plurality of electric units EM-1, ..., EM-N includes one or more high inertia electric units EM-1, ..., EM-N with response curves 110 not suitable to at least one of the one or more demand-reserve services;
- testing 2200 each of the electric units EM-1, ..., EM-N to measure power consumption 220 and to measure a response curve 110 with a pre-set time resolution,
- creating 2300 one or more virtual electric machine 30 by combining the power consumption 220 and the response curves 110 of the plurality of electric units EM-1, ..., EM-N including at least one of the one or more high inertia electric units EM-1, ..., EM-N to a virtual response curve 230 matching the requirements of at least one of the demand-response resources 140.

## Claims

1. Method (1000) for forming a demand-response resource to an electricity market zone (10) and/or combined market zones (20), wherein the method (1000) comprises steps of
- providing (1100) electric units (EM-1, ..., EM-N) within an electricity market zone (10) operated by one or more third-parties;
- providing (1100) response curves (110) of the respective plurality of electric units (EM-1, ..., EM-N);
- receiving (1200) power consumption data (120) of the plurality of electric units (EM-1, ..., EM-N);
- monitoring (1300) balancing demand of the electricity market zone (10) and/or the combined market zones (20);
- forming (1400) a demand-response resource (140) by combining several of the electric units (EM-1, ..., EM-N) into a virtual electric machine (30) as a function of the balancing demand (130) and the power consumption data (120) of the plurality of electric units (EM-1, ..., EM-N); and
- operating (1500) the virtual electric machine (30) as a function of market demand.

2. Method (1000) according to claim 1, wherein the method (1000) comprises steps of
- reserving (1600) part of a power consumption availability of the electric units (EM-1, ..., EM-N) forming the demand-response resource (140), such that the third party is prevented from using the reserved part of the available power consumption.

3. Method (1000) according to claim 1 or 2, wherein the virtual electric machine (30) is formed with an excess capacity (32) relative to required balancing demand (130), such that one, more or all electric units (EM-1, ..., EM-N) is available to the one or more third-parties irrespective of the electric units (EM-1, ..., EM-N) forming part of the virtual electric machine (30).

4. Method (1000) according to anyone of claims 1-3, wherein the method (1000) further comprises a step of
- providing (1100) a plurality of auxiliary electric units (AEU-1, ..., AEU-M) within an electricity market zone (10) and response curves (110) of the respective plurality of passive electric units (EM-1, ..., EM-N);
wherein the forming (1400) the demand-response resource (140) by combining several of the electric units (EM-1, ..., EM-N) into a virtual electric machine (30) includes combining one or more of the auxiliary electric units (AEU-1, ..., AEU-M).

5. An aggregated system (500) for responding to a balancing demand on an electricity market zone (10) and/or combined electricity market zones (20), wherein the aggregated system (500) comprises
- a plurality of electric units (EM-1, ..., EM-N) within an electricity market zone (10) operated by one or more third-parties;
- a plurality of local controllers (512) connected to and controlling the plurality of electric units (EM-1, ..., EM-N), wherein each of the local controllers (512) comprises a local communication module (514) and a means for receiving power consumption data of the electric units (EM-1, ..., EM-N) connected to the local controllers (512);
- a server (600) comprising
- a server communication module (610) in communication with the local communication modules (514), wherein the local communication modules (514) send power consumption data (120) of the electric units (EM-1, ..., EM-N) connected to the local controllers (512); and
- a storage module (620) having stored thereon response curves (110) of the plurality of electric units (EM-1, ..., EM-N);
- a monitoring module (630) adapted for monitoring balancing demand (130) of the electricity market zone (10) and/or the combined market zones (20);
- a computation module (640) adapted for forming a demand-response resource (140) by combining several of the electric units (EM-1, ..., EM-N) into a virtual electric machine (30) as a function of the power consumption data (120), the response curves (110) and requirements of the balancing demand; and
- a global controller (650) configured to activate the virtual electric machine (30) by sending instructions to the local controllers (512) of the electric units (EM-1, ..., EM-N) forming part of the virtual electric machine (30).

6. An aggregated system (500) according to claim 5, wherein the server (600) continuously receives power consumption data (120) from the local controllers (512) of the activated virtual electric machine (30) and the global controller (650) provide instruction to change power consumption to one or more of the local controllers (512) of the activated virtual electric machine (30) as a function of the received power consumption data (120).

7. An aggregated system (500) according to claim 5 or 6, wherein the global controller (650) activates two or more virtual electric machines (30) as a function of an imbalance in the electricity market zone (10) or combined electricity market zones (20).

8. An aggregated system (500) according to anyone claims 5-7, wherein the monitoring module (630) comprises a frequency measurement unit monitoring the frequency of the electricity market zone (10) and/or the combined market zones (20), wherein the global controller (650) configured to activate a virtual electric machine (30) as a function of the frequency of the electricity market zone (10) and/or the combined market zones (20).

9. An aggregated system (500) according to anyone of claims 5-8, wherein aggregated system (500) comprises a back-up consumption centre (520) within the electricity market zone (10), wherein the back-up consumption centre (520) comprises
- auxiliary electric units (AEU-1, ..., AEU-M),
- one or more centre controllers (522) connected to the auxiliary electric units (AEU-1, ..., AEU-M) and comprising a centre communication module (524) in communication with the server communication module (610), and
one or more power consumption measurement units,
wherein the computation module (640) is further adapted for forming the demand-response resource (140) by combining several of the electric units (EM-1, ..., EM-N) and one or more of the auxiliary electric units (AEU-1, ..., AEU-M) into the virtual electric machine (30).

10. An aggregated system (500) according to anyone of claims 5-9, wherein one virtual electric machine (30) is formed from a heat pump system (40) and a plurality of ventilations units (50), wherein the heat pump systems (40) and a plurality of ventilations units (50) are operated as a function of instructions from the global controller (650).

11. A computer program product comprising instructions to cause the aggregated system (500) according to anyone of claim 5-11 to execute the steps of the method according to anyone of claims 1-4.

12. A computer-readable medium having stored thereon the computer program of claim 11.

13. Method (2000) for forming virtual electric machine (30) to be used as one or more demand-response resources (140) in an electricity market zone (10) and/or combined energy market zone (20), the method (2000) comprises steps of
- providing (2100) a plurality of electric units (EM-1, ..., EM-N) within an electricity market zone (10), wherein the plurality of electric units (EM-1, ..., EM-N) includes one or more high inertia electric units (EM-1, ..., EM-N) with response curves (110) not suitable to at least one of the one or more demand-reserve services;
- testing (2200) each of the electric units (EM-1, ..., EM-N) to measure power consumption (220) and to measure a response curve (110) with a pre-set time resolution,
- creating (2300) one or more virtual electric machine (30) by combining the power consumption (220) and the response curves (110) of the plurality of electric units (EM-1, ..., EM-N) including at least one of the one or more high inertia electric units (EM-1, ..., EM-N) to a virtual response curve (230) matching the requirements of at least one of the demand-response resources (140).

14. Method (1000) according to claim 13, wherein the time resolution is 30 second, or 10 second or 5 second or 1 second, 0.1 second, or a greater time resolution.

15. Method (1000) according to claim 13 or 14, wherein two or more virtual electric machine (30) includes at least one common electric unit (EM-1, ..., EM-N) from the plurality of electric units (EM-1, ..., EM-N).
